(19)

Europäisches Patentamt
European Patent Office
Office européen des brevets

(11) **EP 4 614 770 A1**

(12) **EUROPEAN PATENT APPLICATION**
published in accordance with Art. 153(4) EPC

(43) Date of publication:
**10.09.2025 Bulletin 2025/37**

(21) Application number: **23897631.0**

(22) Date of filing: **22.11.2023**

(51) International Patent Classification (IPC):
*H02K 1/278* (2022.01)    *H02K 15/03* (2025.01)

(52) Cooperative Patent Classification (CPC):
**H02K 1/278; H02K 15/03**

(86) International application number:
**PCT/JP2023/041916**

(87) International publication number:
**WO 2024/116983 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022   JP 2022189846**
**23.03.2023   JP 2023046258**

(71) Applicant: **Toray Industries, Inc.**
**Tokyo 103-8666 (JP)**

(72) Inventors:
• **SUENAGA Kazumasa**
**Iyo-gun, Ehime 791-3193 (JP)**
• **TAKAIWA Reo**
**Iyo-gun, Ehime 791-3193 (JP)**
• **MIYAZAKI Yusuke**
**Iyo-gun, Ehime 791-3193 (JP)**
• **HOSOKAWA Naofumi**
**Iyo-gun, Ehime 791-3193 (JP)**
• **SANO Kentaro**
**Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

(54) **ROTATING ELECTRIC MACHINE PROTECTIVE RING, MANUFACTURING METHOD THEREOF, ROTATING ELECTRIC MACHINE , AND ELECTRICALLY-DRIVEN MOBILITY EQUIPMENT**

(57)    A rotating electrical machine protection ring constructed by winding a tape-like or sheet-like material made of reinforcing fibers impregnated with resin several times in a circular manner to form a cylindrical laminate and molding the cylindrical laminate, wherein there is formed, in a winding end region of an outermost layer of the laminate, an area in which the reinforcing fibers spread is formed. There is provided a rotating electrical machine protection ring and a manufacturing method of the rotating electrical machine protection ring, the rotating electrical machine protection ring being constructed by molding a fiber-reinforced composite material that has been wound on an outside of a rotor in a rotating electrical machine, wherein the rotating electrical machine protection ring is given improved strength by preventing occurrence of delamination in a winding end portion of the rotating electrical machine protection ring while the rotating electrical machine is operating, thus enabling the rotating electrical machine to rotate at a higher speed.

[Fig. 1]

## Description

Technical Field

The present invention relates to a rotating electrical machine protection ring, a manufacturing method of the rotating electrical machine protection ring, a rotating electrical machine, and electric mobility equipment.

Background Art

In recent years, to achieve improved performance of a rotating electrical machine, there has been a demand for rotating the rotating electrical machine at a higher speed. Types of the rotating electrical machines include a Surface Permanent Magnet (SPM) type in which a permanent magnet is disposed on an outer circumference side of a rotor and an Internal Permanent Magnet (IPM) type in which a permanent magnet is embedded in a rotor. When the rotating electrical machine is rotated at a high speed, the permanent magnet disposed on the outer circumference may fall off the rotor due to centrifugal force, or the rotor itself may be damaged. In order to prevent destruction of the rotating electrical machine due to the high-speed rotation, Patent Literature 1 describes a sleeve or rotor sleeve placed on an outer periphery of a permanent magnet disposed on an outer circumference side of a rotary member in an SPM type rotating electrical machine in such a way as to cover the permanent magnet, wherein the sleeve or rotor sleeve is a ring-shaped material and obtained by molding a tape-like fiber tow that is formed by putting together a plurality of threadlike fibers being arranged in one direction into a flat shape by using resin.

As the ring-shaped material described above, a fiber-reinforced composite material is used because of its high strength, lightweight, and the like. It is described that a material in which carbon fiber in particular is used as a reinforcing fiber is preferred.

Patent Literature 2 describes a retainer that holds magnets from an outer circumference side, the magnets being arranged in such a way as to surround an outer circumference of a rotation shaft of a rotor in a rotating electrical machine in an annular fashion as well as a technique in which the retainer is constructed by winding a fiber tow several times in a circular manner to be stacked, the fiber tow being formed by putting together a plurality of fibers into a tape-like shape, and bonding the fiber tow integrally with resin serving as a matrix, and delamination of the fiber tow in a winding end portion is prevented by cutting the fiber tow at a winding end in a substantially V shape.

Citation List

Patent Literature

Patent Literature 1: JP 2019-71763 A
Patent Literature 2: JP 2019-110622 A

Summary of Invention

Technical Problem

In the invention disclosed in Patent Literature 1, when a strong tension is applied to the aforementioned sleeve or rotor sleeve (ring) due to centrifugal force caused by the high-speed rotation of the rotating electrical machine, the ring is destroyed due to delamination, from other portions, of the material constituting the winding end portion of the ring constructed by molding the tape-like fiber tow that has been wound, which causes a problem of reduced strength.

In the invention disclosed in Patent Literature 2, although it is intended to prevent the delamination in the winding end portion by cutting the fiber tow at the winding end in the V shape, stress is concentrated in a distal end portion that has been cut in the V shape, and an effect of preventing the delamination in the winding end portion is not satisfactory.

In the present invention, the ring-shaped material that is wound on an outside of the rotor of the rotating electrical machine and may be used for protecting the rotor is referred to as a rotating electrical machine protection ring.

It is an object of the present invention to remedy the drawback of the conventional art and provide a rotating electrical machine protection ring, a manufacturing method of the rotating electrical machine protection ring, a rotating electrical machine, and electric mobility equipment, the rotating electrical machine protection ring being constructed by molding a fiber-reinforced composite material that has been wound on an outside of a rotor in the rotating electrical machine, wherein the rotating electrical machine protection ring is given improved strength by preventing occurrence of delamination in a winding end portion of the rotating electrical machine protection ring while the rotating electrical machine is operating, thus enabling the rotating electrical machine to rotate at a higher speed.

Solution to Problem

To solve the problems described above, the present invention includes the following configurations:

(1) A rotating electrical machine protection ring constructed by winding a tape-like or sheet-like material made of reinforcing fibers impregnated with resin several times in a circular manner to form a cylindrical laminate and molding the cylindrical laminate, wherein there is formed, in a winding end region of an outermost layer of the laminate, an area in which the reinforcing fibers spread is formed.
(2) A rotating electrical machine protection ring constructed by winding a tape-like or sheet-like material made of reinforcing fibers impregnated with resin several times in a circular manner to form a cylindrical laminate and molding the cylindrical laminate, wherein there is formed, in a winding end region of an outermost layer of the laminate, a wide area that is wider than an average width t of a region other than the winding end region of the material.
(3) The rotating electrical machine protection ring according to (2), wherein a maximum width L of the wide area and the average width t satisfy the following equation (1).

$$10 \times t \geq L \geq 1.1 \times t \quad \text{equation (1)}$$

(4) The rotating electrical machine protection ring according to (2), wherein the wide area is formed by spreading the fibers constituting the winding end region.
(5) A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein in a winding end region of an outermost layer of the laminate, an area in which the reinforcing fibers spread is formed by pressing a heated tool to the winding end region of the laminate.
(6) A rotating electrical machine including the rotating electrical machine protection ring according to any one of (1) to (4), wherein a single output of the rotating electrical machine is 200 kW or more.
(7) A rotating electrical machine including the rotating electrical machine protection ring according to any one of (1) to (4), wherein a single output density of the rotating electrical machine is 6 kW/kg or more.
(8) Electric mobility equipment including the rotating electrical machine according to (6) or (7). Advantageous Effects of Invention

The rotating electrical machine protection ring according to the present invention prevents delamination in a longitudinal direction in a winding end portion of the outermost layer of the ring while the rotating electrical machine is operating, thus enabling the rotating electrical machine to rotate at a higher speed.

Brief Description of Drawings

Fig. 1 is a perspective view of a rotating electrical machine protection ring according to an embodiment of the present invention.
Fig. 2 is a plan view of a portion of a tape-like or sheet-like material according to the embodiment of the present invention, the portion including a winding end region.

Description of Embodiments

Described below are mainly a configuration of a rotating electrical machine protection ring according to the present invention as described above and a manufacturing method of the rotating electrical machine protection ring.

(A configuration of the rotating electrical machine protection ring)

The rotating electrical machine protection ring according to the present invention is constructed by winding a tape-like or sheet-like material made of reinforcing fibers impregnated with resin several times in a circular manner to form a cylindrical laminate and molding the cylindrical laminate. The tape-like or sheet-like material may be wound continuously from start to finish or may be wound intermittently in several batches. In the present disclosure, the term "laminate" may refer to a state in which an object is obtained after molding the material that has been wound and stacked or a state in which an object is formed during a manufacturing process that is before molding the material that has been wound and stacked.

The reinforcing fiber used for the fiber-reinforced composite material described above is not particularly limited, and glass fiber, carbon fiber, aramid fiber, boron fiber, alumina fiber, silicon carbide fiber, or the like may be used. Two types or more of these fibers may be used in combination. Carbon fiber is preferably used since it enables a lightweight and high stiffness fiber-reinforced composite material to be obtained.

A fiber diameter of the reinforcing fiber used for the aforementioned fiber-reinforced composite material is not particularly limited, but the fiber diameter is preferably 10 μm or less, more preferably 8 μm or less, and even more preferably 6 μm or less, and the fiber having the fiber diameter of 4.5 μm or more may be used.

The fiber diameter of the aforementioned reinforcing fiber is measured as follows. Mass per unit length Af (g/m) and specific gravity Bf (g/cm$^3$) are determined for multiple reinforcing fibers to be measured. Using the obtained values of Af and Bf and the number of fibers Cf in the reinforcing fibers to be measured, the fiber diameter of the reinforcing fibers (μm) is calculated according to the following equation.

$$\text{The fiber diameter of the reinforcing fibers (μm)} = ((Af/Bf/Cf)/\pi)^{(1/2)} \times 2 \times 10^3$$

The resin used for the aforementioned fiber-reinforced composite material is not particularly limited, and thermosetting resin such as epoxy resin, unsaturated polyester resin, phenol resin, vinylester resin, or cyanate ester resin or thermoplastic resin such as polyaryletherketone resin, polyether ether ketone resin, polyether ketone resin, polyetherimide resin, polyphenylene sulfide resin, polyether sulfone resin, polyamide resin, or polycarbonate resin may be used. Two types or more of these resins may be used in combination.

The rotating electrical machine protection ring according to the present invention is composed of a laminate formed by winding a tape-like or sheet-like material made of reinforcing fibers impregnated with resin several times in a circular manner.

As the tape-like or sheet-like material, towpreg, prepreg, or a slit tape in which reinforcing fibers are impregnated with resin in advance may be used, or a material that is formed by means of a technique such as a filament winding by winding reinforcing fibers impregnated on the spot with resin in a circular manner may be used. The slit tape is a type of tape-like material and created by cutting a material in which reinforcing fibers are impregnated with resin in advance into a tape-like shape having a specified width.

The width of the tape-like or sheet-like material is not particularly limited, however, when a material having a width of 1 mm to 100 mm is used, formation of a laminate by winding the material becomes easier, and this is preferable. More preferably, a material having a width of 1 mm to 50 mm is used, and even more preferably, a material having a width of 1 mm to 30 mm is used. Tape-like materials and sheet-like materials cannot be always clearly distinguished. For example, when the material has a width of 100 mm, the material may be assumed to be a tape-like material or a sheet-like material. In contrast, when the material has a width of 1 mm to 30 mm, the material may be usually assumed to be a tape-like material.

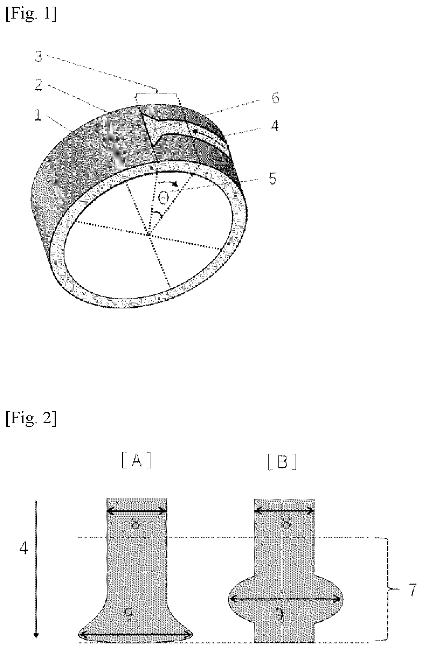

In the present invention, assuming that a line connecting a winding end and a center of a circle, the circle being recognized in a plan view in which the cylindrically shaped laminate according to the present invention is viewed in an axial direction, is an initial line (0°) and Θ is an angle determined relative to the initial line in a direction opposite to a direction of winding the tape-like or sheet-like material, a winding end region of an outermost layer means a circumferential region for which Θ is in a range of 0° or more to 30° or less (see Fig. 1).

The winding end is an end in a longitudinal direction of the laminate formed by winding the tape-like or sheet-like material. When the end in the longitudinal direction of the laminate is not aligned in a width direction of the laminate, for example, in a case in which a shape of a winding end portion is a substantially fan shape, the initial line described above (0°) for the winding end region is assumed to include a point at a distal end in the longitudinal direction of the laminate.

To be described herein are two aspects of the rotating electrical machine protection ring according to the present invention, i.e., a first aspect and a second aspect. First, in the first aspect of the rotating electrical machine protection ring according to the present invention, there is formed an area in which the reinforcing fibers constituting the winding end region spread in the winding end region of the outermost layer of the laminate described above. Since the material is widened in the width direction and an area of contact with a layer on an inner circumference side is increased in this area, delamination in the winding end portion is prevented.

It is to be noted that by spreading the fibers in the winding end portion, a fiber tow constituting the winding end portion is finely divided and thus widened in the width direction and as a result, a sloping portion in which a thickness decreases toward the winding end may be formed, which is preferable since an effect of preventing the delamination of the rotating electrical machine protection ring may be further improved. In contrast, it is preferable not to spread the fibers constituting portions other than the winding end region. A method of spreading the fibers is described below.

Next, in the second aspect of the rotating electrical machine protection ring according to the present invention, there is formed, in the winding end region of the outermost layer of the laminate described above, a wide area that is wider than an average width t of a region other than the winding end region of the material. The wide area described above may be formed by spreading the reinforcing fibers constituting the winding end region as described above, but a method of forming the wide area is not limited to spreading the fibers as described below.

More specifically, in the second aspect of the present invention, a maximum width L of the wide area needs to be wider than the average width t of the region other than the winding end region of the tape-like or sheet-like material, and it is preferable if the width L satisfies a range defined by the equation (1), i.e., $10 \times t \geq L \geq 1.1 \times t$, since it can be expected that the effect of preventing the delamination of the rotating electrical machine protection ring is obtained. Further, it is more preferable if the width L satisfies a range defined by $5 \times t \geq L \geq 1.1 \times t$ since the effect of preventing the delamination of the rotating electrical machine protection ring may be further improved and even more preferable if the width L satisfies a range defined by $2.5 \times t \geq L \geq 1.1 \times t$. Specifically, the aforementioned effect can be achieved when the material is tape-like and narrow in width in its entirety.

As the average width t, when it is known that a width of the region other than the winding end region of the tape-like or sheet-like material is constant, a value of the width may be used, and when it is verified that the width is substantially constant, an average of widths at five points that are freely selected from the region other than the winding end region may be used. When it is not verified that the width is substantially constant, widths are measured across the whole winding end region and an average of the widths is used.

In the second aspect of the present invention, the wide area is preferably not included in the region other than the winding end region, and the width is preferably constant or substantially constant. The phrase "substantially constant" used here means that the average width t of the region other than the winding end region of the tape-like or sheet-like material preferably satisfies a range defined by $1.05 \times t \geq t \geq 0.9 \times t$ and more preferably satisfies a range defined by $1.05 \times t \geq t \geq 0.95 \times t$. Configuring the region to have a constant or substantially constant width makes manufacturing of the tape-like or sheet-like material and handling of the material during winding the material in a circular manner easier, and formation of the laminate becomes easier.

A location for forming the wide area is not limited as long as the wide area is in the winding end region of the rotating electrical machine protection ring, but the wide area is preferably formed in a portion including the winding end as illustrated in Fig. 2A since the effect of preventing the delamination of the rotating electrical machine protection ring may be further improved. Alternatively, the wide area may be formed in a portion not including the winding end as illustrated in Fig. 2B.

The shape of the wide area is not particularly limited, but the wide area is preferably formed to have a gradually expanding shape toward the winding end as illustrated in Fig. 2A, for example, a substantially fan shape or a substantially trapezoidal shape since the effect of preventing the delamination of the rotating electrical machine protection ring may be further improved.

In either of the first or second aspect described above, the rotating electrical machine protection ring according to the present invention preferably has an inner diameter of 1 cm to 25 cm since this may further improve the effect of preventing delamination. In addition, the thickness of the ring is preferably 0.1 mm to 5.0 mm since this may further improve the effect of preventing delamination. When the inner diameter and the thickness of the rotating electrical machine protection ring are in the corresponding range described above, an effect of preventing delamination of the outermost layer of the rotating electrical machine protection ring may be improved, thus enabling the rotating electrical machine to rotate at a higher speed.

(A construction method of the rotating electrical machine protection ring)

**In** the present invention, in either the first or second aspect, formation of the laminate using the tape-like or sheet-like material is usually preferably performed by winding the tape-like or sheet-like material around a columnar material.

As the columnar material, a core material such as a mandrel may be used, or a member to which the rotating electrical machine protection ring is ultimately tightly fit, such as the rotor of the rotating electrical machine, may be used.

Formation of the laminate may be performed by winding the tape-like or sheet-like material repeatedly in a direction that has an angle of 0° relative to a circumferential direction of the columnar material being a reference direction. In other words, the tape-like or sheet-like material may be wound repeatedly on a position having the same height as the columnar material. Alternatively, the tape-like or sheet-like material may be wound helically in a direction that has a different angle relative to the aforementioned reference direction.

When thermosetting resin is used as the resin constituting the material, the rotating electrical machine protection ring may be obtained by means of a technique such as autoclave molding or tape wrapping molding by applying heat to and pressure on the laminate and curing the laminate.

When thermoplastic resin is used as the material, the rotating electrical machine protection ring may be obtained concurrently with formation of the laminate by welding the material by means of application of heat to the material using a laser or the like or vibration welding or ultrasonic welding while winding the material during formation of the laminate.

In the second aspect of the present invention, the wide area may be formed in the tape-like or sheet-like material itself before winding the laminate, or the wide area may be formed by spreading the fibers constituting the winding end region as described above during or after formation of the laminate and before molding the laminate.

Spreading the fibers after formation of the laminate and before molding the laminate may be achieved, for example, by pressing a heated tool to the winding end region of the laminate before molding and preferably by further applying friction to the winding end region. Alternatively, spreading the fibers may be achieved by applying vibrations or ultrasonic waves to the winding end region or by applying both vibrations and heat.

In the wide area formed in such a manner, the fibers that have been spread are pressed and adhere tightly to a layer on the inner circumference side, which is preferable since delamination strength in the winding end portion may be improved and the effect of preventing delamination may be further improved.

A form of the heated tool to be pressed to the winding end region for spreading the fibers is not particularly limited, and for example, a metallic brush may be used as the tool and by heating and pressing the metallic brush to the laminate and preferably further applying friction to the laminate, the fibers in the winding end portion may be efficiently spread.

A rotating electrical machine according to the present invention includes the rotating electrical machine protection ring that has been described above, and more specifically, the rotating electrical machine is constructed of the rotating electrical machine protection ring and a rotor. In addition, the present invention can provide, by using the rotating electrical machine, electric mobility equipment including the rotating electrical machine.

The electric mobility equipment referred to herein includes, but is not limited to, electric vehicles, electric aircraft, and electric ships, and may be any mobility equipment driven by the rotating electrical machine. The present technique improves the output or output density of the rotating electrical machine and enables the rotating electrical machine to be lightweight and downsized, thus it can be expected that the mobility equipment has an improved traveling distance or greater degrees of freedom in the design. A single output, that is, an output that a single rotating electrical machine can individually generate is preferably 200 kW or more, more preferably 300 kW or more, and the rotating electrical machine having an output of 2000 kW or less may be used. A single output density, that is, a density of the output that a single rotating electrical machine can individually generate is preferably 6 kW/kg or more, more preferably 8 kW/kg or more, and the rotating electrical machine having an output density of 30 kW or less may be used.

Examples

Specific examples of the construction method of the rotating electrical machine protection ring according to the present invention are described below.

Peeling tests for the laminate were performed in the winding end portion in a manner as described below and evaluations were made.

*Peeling test in the winding end portion

The rotating electrical machine protection rings obtained in each of Examples and Comparative Example were used as test specimens, and Naval Ordnance Laboratory Ring Tests (ASTM D2290 (2019)) were performed by using an Instron Universal Testing Machine (manufactured by Instron corporation) with a diameter of a fixture to be placed inside an inner periphery of the test specimen being 130 mm and a crosshead speed being 2.5 mm/min. It was evaluated that delamination in the winding end portion was prevented when the rotating electrical machine protection ring was fractured without delamination found in the winding end portion as a load applied on the ring was increased, and the load applied when delamination occurred was determined as the load at the time of delamination. The load applied when the ring fractured was determined as the load at the time of fracture of the ring. When it was found that even a portion of the winding end portion was delaminated from the inner layer, it was determined that delamination had occurred.

(Example 1)

As the columnar material for forming the laminate, a metallic mandrel having a diameter of 150 mm and a height of 20 mm was used. As the tape-like material constituting the laminate, a plurality of tows, each of the tows consisting of 12000 carbon fibers each having a fiber diameter of 5μm, were aligned and formed into unidirectionally aligned reinforcing fibers in such a way that the fibers had a weight per unit area of 100 g/m$^2$, and an epoxy resin composition composed of bisphenol A type epoxy, dicyandiamide (serving as a curing agent), diuron (serving as a curing accelerator), and polyvinyl formal (serving as a viscosity modifier) was impregnated into the fibers, thereby obtaining a sheet-like unidirectional prepreg having resin content of 30% by mass, and the prepreg was cut in such a way as to have a width of 7 mm in a width direction of the fibers, and tape-like prepregs were prepared.

After attaching the tape-like prepregs that had been cut to the mandrel in such a way that the longitudinal direction of the fibers is perpendicular to an axial direction of the mandrel, the prepregs were wound helically around the mandrel while applying tension until the thickness became 1 mm, thus the laminate was formed.

The heated metallic brush was pressed to the winding end portion of the outermost layer of the laminate that had been formed and friction was applied to the winding end portion, thus there was formed, in the winding end region with the winding end being the end point, an area (the wide area) in which the width of the material was widened toward the winding end and the fibers were spread in a substantially fan shape. An origin of the wide area was located 1.2 cm from the winding end in a direction opposite to the direction in which the material was wound, and the maximum width of the wide area was 15 mm.

After the wide area was formed, the laminate was covered with a bagging film, and by pressurizing, heating and curing the laminate using an autoclave, the rotating electrical machine protection ring was constructed.

(Example 2)

As the columnar material for forming the laminate, a metallic mandrel having a diameter of 130 mm and a height of 15 mm was used. A sheet-like unidirectional prepreg was obtained under the same condition as that in Example 1, and the prepreg was cut in such a way as to have a width of 3 mm in the width direction of the fibers, and tape-like prepregs were prepared.

After attaching the tape-like prepregs that had been cut to the mandrel in such a way that the longitudinal direction of the fibers is perpendicular to the axial direction of the mandrel, the prepregs were wound helically around the mandrel while applying tension until the thickness becomes 1 mm, thus the laminate was formed.

By applying friction with a hand to the winding end portion of the outermost layer of the laminate that had been formed, there was formed, in the winding end region, a substantially fan-shape area (the wide area) in which the reinforcing fibers were spread and the width of the material was widened toward the winding end. The origin of the wide area was located 1.5 cm from the winding end in a direction opposite to the direction in which the material was wound, and the maximum width of the wide area was 6 mm.

After the wide area was formed, the laminate was covered with a bagging film, and by pressurizing, heating and curing the laminate using an autoclave, the rotating electrical machine protection ring was constructed.

(Example 3)

The laminate was formed under the same condition as that in Example 2, and except that the origin of the wide area was located 2.7 cm from the winding end in a direction opposite to the direction in which the material was wound, the rotating electrical machine protection ring in which a wide area having the same substantially fan shape as in Example 2 and the same maximum width as that in Example 2 was formed in the winding end region was obtained in the same manner as in Example 2.

Peeling tests were performed in the winding end portion for the rotating electrical machine protection rings that had been created by the methods as described above, and the effect of preventing delamination was confirmed for the rotating electrical machine protection ring in any of the Examples 1 to 3. The results are illustrated in Fig. 1.

(Comparative Example 1)

Under the same condition as that in Example 2 except that the wide area was not formed, the rotating electrical machine protection ring was obtained.

A peeling test was performed in the winding end portion for the rotating electrical machine protection ring that had been created by the method as described above, and the effect of preventing delamination was not confirmed. The result is illustrated in Fig. 1.

[Table 1]

| | Example 1 | Example 2 | Example 3 | Comparative Example 1 |
|---|---|---|---|---|
| Average width t (mm) | 7 | 3 | 3 | 3 |
| Maximum width of wide area L (mm) | 15 | 6 | 6 | no wide area |
| Distance from the starting point of wide area to the winding end (cm) | 1.2 | 1.5 | 2.7 | no wide area |
| Load at the time of delamination (kN) | - | 12.2 | 10.2 | 8.9 |
| Effect of Preventing | present | present | present | absent |

Industrial Applicability

The rotating electrical machine protection ring according to the present invention may be placed on an outside of the rotor of the rotating electrical machine such as a generator or an electric motor, and the rotating electrical machine protection ring may be used for protecting the rotor in which a magnet is contained from destruction caused by centrifugal force while the rotating electrical machine is operating. The present invention can provide a rotating electrical machine constructed of the rotating electrical machine protection ring and the rotor. In addition, the present invention can provide electric mobility equipment in which the rotating electrical machine is used.

For example, the rotating electrical machine protection ring may be preferably applied to the SPM type electric motor that has been referred to, and may prevent a permanent magnet from falling off a rotor due to centrifugal force while the rotating electrical machine is operating, thus enabling the rotating electrical machine to rotate at a high speed. In addition, the rotating electrical machine protection ring may be preferably applied to the IPM type electric motor that has been referred to, and may prevent an electrical steel sheet from being destroyed due to centrifugal force while the rotating electrical machine is operating, thus enabling the rotating electrical machine to rotate at a high speed.

Reference Signs List

1    laminate
2    winding end
3    winding end region
4    winding direction of the tape-like or sheet-like material
5    angle Θ determined, assuming that a radius to the winding end 2 of a circle in a plan view of the ring is an initial line (0°), relative to the initial line in a direction opposite to the winding direction 4 of the material
6    wide area
7    winding end region
8    average width t of a region other than the winding end region
9    maximum width L of the wide area

## Claims

1.  A rotating electrical machine protection ring constructed by winding a tape-like or sheet-like material made of reinforcing fibers impregnated with resin several times in a circular manner to form a cylindrical laminate and molding the cylindrical laminate, wherein there is formed, in a winding end region of an outermost layer of the laminate, an area in which the reinforcing fibers spread is formed.

2.  A rotating electrical machine protection ring constructed by winding a tape-like or sheet-like material made of reinforcing fibers impregnated with resin several times in a circular manner to form a cylindrical laminate and molding the cylindrical laminate, wherein, in a winding end region of an outermost layer of the laminate, there is formed a wide area that is wider than an average width t of a region other than the winding end region of the material.

3.  The rotating electrical machine protection ring according to claim 2, wherein a maximum width L of the wide area and the average width t satisfy the following equation (1):

$$10 \times t \geq L \geq 1.1 \times t \quad \text{equation (1)}$$

4.  The rotating electrical machine protection ring according to claim 2, wherein the wide area is formed by spreading the fibers constituting the winding end region.

5.  A manufacturing method of a rotating electrical machine protection ring obtained by winding a tape-like or sheet-like material made of reinforcing fibers impregnated with resin several times in a circular manner to form a cylindrical laminate and subsequently molding the cylindrical laminate, wherein in a winding end region of an outermost layer of the laminate, an area in which the reinforcing fibers spread is formed by pressing a heated tool to the winding end region of the material.

6.  A rotating electrical machine including the rotating electrical machine protection ring according to any one of claims 1 to 4, wherein a single output of the rotating electrical machine is 200 kW or more.

7. A rotating electrical machine including the rotating electrical machine protection ring according to any one of claims 1 to 4, wherein a single output density of the rotating electrical machine is 6 kW/kg or more.

8. Electric mobility equipment including the rotating electrical machine according to claim 6 or 7.

[Fig. 1]

[Fig. 2]

## INTERNATIONAL SEARCH REPORT

| | International application No. |
|---|---|
| | **PCT/JP2023/041916** |

**A. CLASSIFICATION OF SUBJECT MATTER**

*H02K 1/278*(2022.01)i; *H02K 15/03*(2006.01)i
FI:  H02K1/278; H02K15/03 Z

According to International Patent Classification (IPC) or to both national classification and IPC

**B. FIELDS SEARCHED**

Minimum documentation searched (classification system followed by classification symbols)

H02K1/278; H02K15/03

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-51594 A (MIZUNO KK) 04 April 2019 (2019-04-04) | 1, 6-8 |
| | paragraphs [0002], [0021]-[0057], fig. 1-12 | |
| Y | | 5 |
| Y | JP 2016-82773 A (FANUC LTD) 16 May 2016 (2016-05-16) | 2-3, 6-8 |
| | paragraphs [0026]-[0050], fig. 1-4 | |
| A | | 4 |
| Y | JP 2021-167656 A (TOYOTA MOTOR CORP) 21 October 2021 (2021-10-21) | 2-3, 6-8 |
| | paragraphs [0013]-[0039], fig. 1-3 | |
| Y | JP 2015-113393 A (MITSUBISHI RAYON CO) 22 June 2015 (2015-06-22) | 5 |
| | paragraph [0029], fig. 1 | |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 December 2023** | **16 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 614 770 A1

**INTERNATIONAL SEARCH REPORT**
Information on patent family members

International application No.

**PCT/JP2023/041916**

| Patent document cited in search report | | | Publication date (day/month/year) | Patent family member(s) | Publication date (day/month/year) |
|---|---|---|---|---|---|
| JP | 2019-51594 | A | 04 April 2019 | (Family: none) | |
| JP | 2016-82773 | A | 16 May 2016 | US 2016/0111926 A1 paragraphs [0033]-[0057], fig. 1-4 CN 105529850 A | |
| JP | 2021-167656 | A | 21 October 2021 | (Family: none) | |
| JP | 2015-113393 | A | 22 June 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019071763 A

- JP 2019110622 A